# FASCICULE DE BREVET EUROPEEN

(11) **EP 0 722 399 B1**
(45) Date de publication et mention de la délivrance du brevet: **04.06.1997**
(21) Numéro de dépôt: 94926966.6
(22) Date de dépôt: 08.09.1994
(51) Int. Cl.: B60T 13/52

(54) **SYSTEME DE FREINAGE ASSISTE A COMMANDE AUTOMATIQUE ET A RESERVE CONTROLEE**
BREMSKRAFTVERSTÄRKER MIT AUTOMATISCHER BETÄTIGUNG UND GEREGELTER RESERVE
POWER-ASSISTED BRAKING SYSTEM WITH AUTOMATIC CONTROL AND CONTROLLED RESERVE

(30) Priorité: 12.10.1993 FR 9312088
(43) Date de publication de la demande: 24.07.1996
(73) Titulaire: Bosch Systemes de Freinage, 93700 Drancy (FR)
(72) Inventeur: CASTEL, Philippe, F-75005 Paris (FR); DOUILLET, Christian, F-92800 Puteaux (FR); KERVAGORET, Gilbert, F-95100 Argenteuil (FR)
(74) Mandataire: Bentz, Jean-Paul
(86) Numéro de dépôt international: FR9401059
(87) Numéro de publication internationale: WO9510436

(56) Documents cités:
- EP-A- 0 347 583
- EP-A- 0 435 113
- DE-A- 3 605 295
- DE-A- 3 705 333

## Description

La présente invention concerne un système de freinage à commande automatique pour véhicule à moteur, comprenant : un servomoteur pneumatique d'assistance à dépression doté d'au moins une première chambre à pression réglable; des première et seconde sources de pression délivrant respectivement une pression relativement basse et une pression relativement haute; une électrovalve pneumatique reliée aux deux sources de pression et à la première chambre du servomoteur et comprenant un électro-aimant susceptible de transmettre une force d'actionnement à un clapet propre à isoler d'une part la première source de pression de la seconde de manière permanente, et d'autre part la première chambre de l'une ou l'autre des deux sources en fonction d'un courant de commande sélectivement fourni à l'électro-aimant; et un générateur de courant commutable, propre à alimenter l'électro-aimant de manière sélective.

Les systèmes de ce type, bien connus dans l'art antérieur notamment grâce au brevet américain US 4 667 471, permettent d'assurer un freinage des roues du véhicule sans intervention volontaire du conducteur du véhicule, lorsque les circonstances l'exigent.

Ces systèmes, qui peuvent en particulier être utilisés pour éviter un patinage des roues au démarrage ou pendant une accélération, lorsque le couple moteur est excessif compte tenu de l'adhérence du véhicule au sol, présentent un intérêt majeur et se trouvent appliqués de plus en plus largement.

Cependant, dans certaines conditions de sollicitation excessive, ces systèmes risquent de provoquer un épuisement relatif de la réserve de basse pression que constitue la première source de pression, et de ne plus pouvoir assurer ultérieurement un freinage volontaire dans des conditions optimales.

En effet, la source de basse pression, qui est en général essentiellement constituée par les pipes d'admission du moteur, représente un volume limité dans lequel se déverse l'air utilisé par le servomoteur à la fin de chaque activation de ce dernier, ce qui tend à provoquer l'épuisement de cette source et dégrader l'assistance offerte par le servomoteur.

Cette situation est particulièrement défavorable dans le cas d'un système d'antipatinage de roues n'assurant aucun contrôle sur le moteur, dans la mesure où l'accélération de ce dernier tend déjà naturellement à dégrader les performances de la source de basse pression.

La présente invention s'inscrit dans ce contexte et vise à garantir une efficacité constante du freinage volontaire en empêchant l'épuisement de la réserve de basse pression.

A cette fin, le système de freinage de l'invention, par ailleurs conforme au préambule ci-dessus, et dans lequel le clapet de l'électrovalve subit sur une section de pression une force de succion d'intensité proportionnelle à une différence de pression entre les première et seconde sources et de même sens que la force d'actionnement, est essentiellement caractérisé en ce que l'électrovalve comprend des moyens élastiques propres à appliquer au clapet une force élastique de valeur déterminée supérieure à celle de la force de succion et de sens contraire, et en ce que la force d'actionnement est limitée à une valeur inférieure à celle de la force élastique.

Dans le mode de réalisation le plus simple de l'invention, la valeur de la force d'actionnement est limitée en prévoyant que le générateur de courant délivre un courant dont l'intensité moyenne est inférieure à un seuil prédéterminé.

Grâce à ces dispositions, l'électrovalve joue en quelque sorte le rôle de capteur de pression différentielle et ne répond à la sollicitation d'un courant de commande que si la somme de la force de succion et de la force d'actionnement correspondant à ce courant est susceptible de vaincre la force élastique, ce qui ne se produit que si la force de succion est supérieure à un seuil au dessus duquel la première source de pression ne présente aucun risque d'épuisement.

D'autres caractéristiques et avantages de l'invention ressortiront clairement de la description qui en est faite ci-après, à titre indicatif et nullement limitatif en référence aux dessins annexés, sur lesquels :
- la Figure 1 est une vue schématique d'un système de freinage conforme à l'invention; et
- la Figure 2 est une vue agrandie formée de deux demi-coupes et illustrant une électrovalve utilisée dans le système de la Figure 1, la moitié inférieure de cette figure représentant l'électrovalve dans son état de repos, et sa moitié supérieure représentant l'électrovalve dans son état excité.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est, pour le freinage normal, contrôlé par un clapet 7 et un plongeur 8, ce dernier étant relié à une pédale de frein 9 par l'intermédiaire d'une tige de commande 10.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8 par un mouvement de la tige de commande 10 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

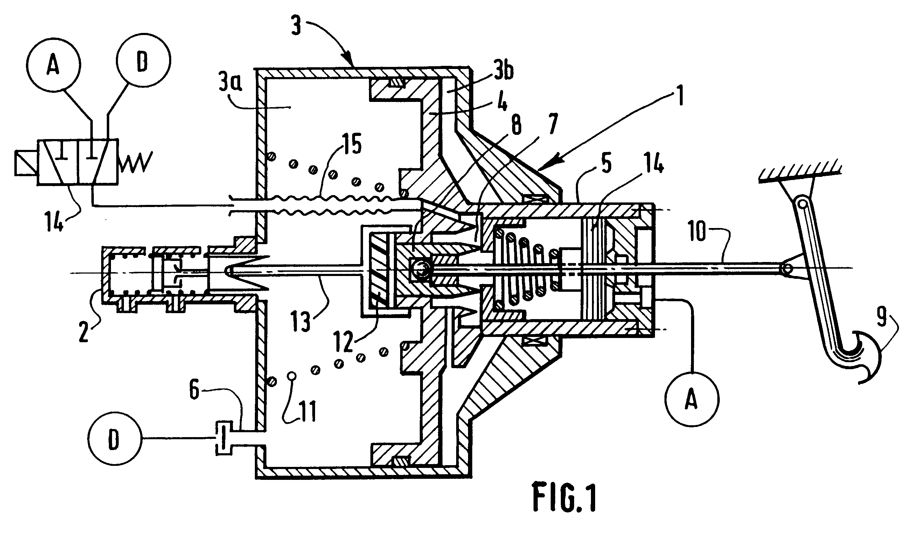

Comme le montre la Figure 1, le système de freinage de l'invention comprend par ailleurs une électrovalve pneumatique 14 destinée à permettre un freinage automatique des roues et reliée à cette fin aux deux sources de pression A et D ainsi qu'à la chambre arrière 3b du servomoteur par l'intermédiaire d'un soufflet 15.

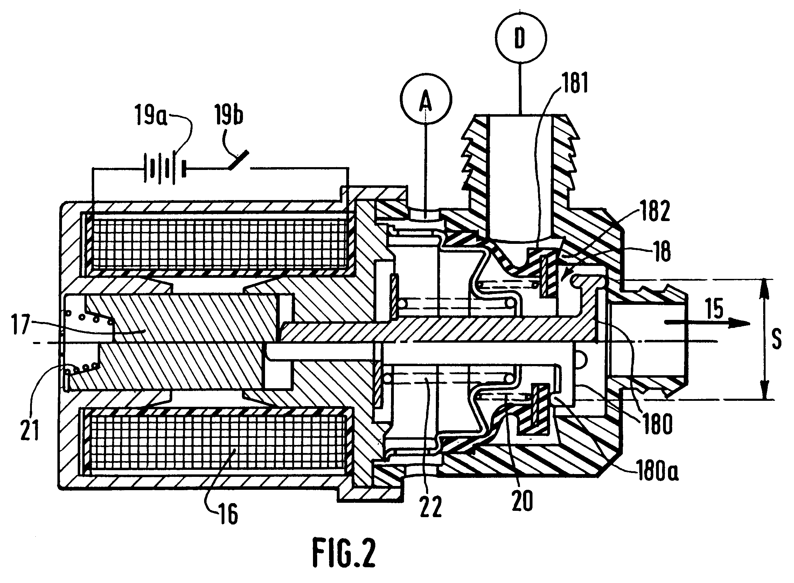

Cette électrovalve comprend (figure 2) un électro-aimant 16 actionnant un noyau 17 susceptible de transmettre une force d'actionnement à un clapet 18, l'électro-aimant étant alimenté de manière sélective par un générateur de courant commutable comprenant une source de courant 19a et un interrupteur 19b.

Le clapet 18 est essentiellement constitué par une tige d'actionnement 180 portant un siège mobile 180a, et par un organe tubulaire 181 propre à coopérer avec le siège mobile 180a et avec un siège fixe 182 interne à l'électrovalve, cet organe tubulaire adoptant une position définie par celle de la tige d'actionnement 180, laquelle suit les mouvements du noyau 17.

Selon la position de la tige d'actionnement 180, l'organe tubulaire 181 coopère soit avec le siège mobile 180a pour isoler la chambre arrière 3b de la source de basse pression D (moitié supérieure de la figure 2), soit avec le siège fixe 182 pour isoler la chambre arrière 3b de la source de haute pression A (moitié inférieure de la figure 2), l'organe tubulaire 181 coopérant en permanence avec l'un ou l'autre des deux sièges pour isoler l'une de l'autre la source de basse pression D et la source de haute pression A.

L'organe tubulaire 181 et le noyau 17 sont sollicités en direction du siège fixe 182 (vers la droite sur la figure 2) par des premier et second ressorts respectifs 20 et 21 tandis que la tige d'actionnement 180 est sollicitée en direction opposée (vers la gauche sur la figure 2) par un troisième ressort 22.

En position de repos de l'électrovalve (moitié inférieure de la figure 2), le clapet, au niveau de la jonction du siège mobile 180a et de l'organe tubulaire 181, subit sur une section de pression S une force de succion d'intensité proportionnelle à la différence des pressions respectivement délivrées par les sources A et D, et de même sens que la force d'actionnement que le noyau 17 transmet à la tige d'actionnement 180 lorsque l'électro-aimant est alimenté par le générateur 19a, 19b.

Selon l'invention, la force élastique résultante appliquée par les ressorts 20, 21 et 22 à ce même clapet 18, toujours au niveau de la jonction du siège mobile 180a et de l'organe tubulaire 181, lorsque l'électrovalve est au repos, a une valeur supérieure à celle de la force de succion que subit ce clapet, et de sens contraire. Concrètement, cette caractéristique se traduit simplement par le fait que la tige d'actionnement 180 se trouve repoussée vers la gauche de la figure 2 pour la position de repos de l'électrovalve.

Par ailleurs, le générateur de courant 19a, 19b délivre un courant d'intensité moyenne inférieure à un seuil prédéterminé, engendrant sur la tige d'actionnement 180 une force d'actionnement de valeur inférieure à celle de la force élastique qui résulte de l'effet des ressorts 20, 21, et 22.

Dans ces conditions, l'électrovalve 14 ne peut passer de son état de repos à son état excité que si une force de succion suffisante vient s'ajouter à la force d'actionnement de l'électro-aimant pour vaincre la force élastique exercée par les ressorts 20 à 22.

Comme le comprendra aisément l'homme de métier à la lecture de la présente description, il est ainsi possible, en calibrant les différentes forces en présence, de n'assurer l'ouverture de l'électrovalve que si une différence de pression suffisante et préalablement choisie pour éviter l'épuisement de la source D existe entre les pressions respectivement délivrées par la source A et cette source D.

## Revendications

1. Système de freinage à commande automatique pour véhicule à moteur, comprenant : un servomoteur pneumatique à dépression (1) doté d'au moins une première chambre à pression réglable (3b); des première et seconde sources de pression (D, A) délivrant respectivement une pression relativement basse et une pression relativement haute; une électrovalve pneumatique (14) reliée aux deux sources de pression (D, A) et à la première chambre (3b) du servomoteur et comprenant un électro-aimant (16) susceptible de transmettre une force d'actionnement à un clapet (18) propre à isoler d'une part la première source de pression (D) de la seconde (A) de manière permanente, et d'autre part la première chambre (3b) de l'une ou l'autre des deux sources (D, A) en fonction d'un courant électrique de commande sélectivement fourni à l'électro-aimant; et un générateur de courant commutable (19a, 19b), propre à alimenter l'électro-aimant de manière sélective, caractérisé en ce que, le clapet (18) subissant sur une section de pression (S) une force de succion d'intensité proportionnelle à une différence de pression entre les première et seconde sources et de même sens que la force d'actionnement, l'électrovalve comprend des moyens élastiques (20, 21, 22) propres à appliquer au clapet une force élastique d'intensité déterminée supérieure à celle de la force de succion et de sens contraire, et en ce que la force d'actionnement est limitée à une valeur inférieure à celle de la force élastique.

2. Système de freinage suivant la revendication 1, caractérisé en ce que le générateur de courant (19a, 19b) délivre un courant dont l'intensité moyenne est inférieure à un seuil prédétermine.

## Claims

1. Automatically controlled braking system for a motor vehicle, comprising: a pneumatic vacuum servo (1) provided with at least a first adjustable-pressure chamber (3b); first and second pressure sources (D, A) respectively delivering a relatively low pressure and a relatively high pressure; a pneumatic solenoid valve (14) connected to the two sources of pressure (D, A) and to the first chamber (3b) of the servo and comprising an electromagnet (16) capable of transmitting an actuating force to a flap valve (18) capable of isolating, on the one hand, the first pressure source (D) from the second (A) permanently, and, on the other hand, the first chamber (3b) from one or other of the two sources (D, A) depending on an electric control current selectively supplied to the electromagnet; and a switchable current generator (19a, 19b) capable of powering the electromagnet selectively, characterized in that, with the flap valve (18) subject, over a pressure cross section (S) to a suction force, the intensity of which is proportional to a pressure difference between the first and second sources and in the same direction as the actuating force, the solenoid valve comprises elastic means (20, 21, 22) capable of applying to the flap valve an elastic force of given intensity greater than that of the suction force and in the opposite direction, and in that the actuating force is limited to a value less than that of the elastic force.

2. Braking system according to claim 1, characterized in that the current generator (19a, 19b) delivers a current, the mean intensity of which is below a predetermined threshold.

## Patentansprüche

1. Bremssystem mit automatischer Steuerung für ein Kraftfahrzeug, mit: einem pneumatischen Unterdruck-Servomotor (1), der mit wenigstens einer ersten Kammer mit regulierbarem Druck (3b) versehen ist; einer ersten und einer zweiten Druckquelle (D, A), welche einen relativ niedrigen Druck bzw. einen relativ hohen Druck liefern; einem pneumatischen Elektroventil (14), das mit den beiden Druckquellen (D, A) und der ersten Kammer (3b) des Servomotors verbunden ist und einen Elektromagneten (16) aufweist, der eine Betätigungskraft auf ein Ventilelement (18) übertragen kann, das zum einen permanent die erste Druckquelle (D) von der zweiten (A) isolieren kann und zum anderen in Abhängigkeit von einem elektrischen Steuerstrom, der dem Elektromagneten selektiv geliefert wird, die erste Kammer (3b) von der einen oder der anderen der beiden Quellen (D, A) isolieren kann; und einem umschaltbaren Stromgenerator (19a, 19b), welcher den Elektromagneten in selektiver Weise versorgen kann, dadurch gekennzeichnet, daß, da das Ventilelement (18) auf einem Druckquerschnitt (S) eine Saugkraft erfährt, deren Intensität proportional zu einer Druckdifferenz zwischen der ersten und der zweiten Quelle ist und deren Richtung der Richtung der Betätigungskraft entspricht, das Elektroventil elastische Mittel (20, 21, 22) aufweist, die auf das Ventilelement eine elastische Kraft bestimmter Intensität aufbringen können, die größer als diejenige der Saugkraft ist und eine entgegengesetzte Richtung hat, und daß die Betätigungskraft auf einen Wert begrenzt ist, der kleiner als derjenige der elastischen Kraft ist.

2. Bremssystem nach Anspruch 1, dadurch gekennzeichnet, daß der Stromgenerator (19a, 19b) einen Strom liefert, dessen mittlere Intensität kleiner als eine vorbestimmte Schwelle ist.
